# EUROPEAN PATENT APPLICATION

(11) **EP 4 394 997 A1**
(43) Date of publication of application: **03.07.2024**
(21) Application number: 23220541.9
(22) Date of filing: 28.12.2023
(51) Int. Cl.: H01M 10/42, H01M 10/613, H01M 10/655, H01M 10/6551, H01M 50/209, H01M 50/284

(54) **ELECTROCHEMICAL APPARATUS AND ELECTRIC DEVICE**

(30) Priority: 30.12.2022 CN 202211721455
(71) Applicant: Xiamen Ampack Technology Limited, Xiamen City, Fujian Province 361000 (CN)
(72) Inventor: ZHENG, Wanxin, Xiamen City, Fujian Province, People s Republic of China, 361000 (CN); XIA, Jun, Xiamen City, Fujian Province, People s Republic of China, 361000 (CN); WANG, Xin, Xiamen City, Fujian Province, People s Republic of China, 361000 (CN)
(74) Representative: Icosa

(57) **Abstract**

An electrochemical apparatus includes a first housing, a second housing, a cell assembly, a first circuit board, a heat dissipating portion, a protrusion, and a fixing member. The first housing and the second housing are connected to form an accommodation space. The cell assembly, the first circuit board, and the fixing member are disposed in the accommodation space, and the cell assembly is connected to the first circuit board. The first circuit board includes an electronic component, the electronic component includes a heat conducting portion, and the heat conducting portion is connected to the protrusion. The heat dissipating portion is disposed outside the accommodation space and connected to the first housing, and the protrusion is connected to the heat dissipating portion. The fixing member is fixed on the first housing, and the heat conducting portion is partly located between the protrusion and the fixing member.

## Description

### TECHNICAL FIELD

This application relates to the technical field of energy storage devices, and specifically, to an electrochemical apparatus and an electric device.

### BACKGROUND

In an electrochemical apparatus, electronic components on its circuit board generates heat during operation, and the temperature rise caused by the heat may affect the performance of the electrochemical apparatus.

### SUMMARY

In view of the foregoing situation, it is necessary to provide an electrochemical apparatus in order to improve the heat dissipation efficiency.

An embodiment of this application provides an electrochemical apparatus, including a first housing, a second housing, a cell assembly, a first circuit board, a heat dissipating portion, a protrusion, and a fixing member. The first housing and the second housing are connected to form an accommodation space. The cell assembly, the first circuit board, and the fixing member are disposed in the accommodation space, and the cell assembly is connected to the first circuit board. The first circuit board includes an electronic component, the electronic component includes a heat conducting portion, and the heat conducting portion is connected to the protrusion. The heat dissipating portion is disposed outside the accommodation space and connected to the first housing, and the protrusion faces the accommodation space. The fixing member is fixed to the first housing, and the heat conducting portion is partly located between the protrusion and the fixing member.

In the foregoing electrochemical apparatus, as the heat conducting portion on the electronic component is connected to the protrusion, the heat conducting portion is partly located between the protrusion and the fixing member, and the protrusion is connected to the heat dissipating portion outside the accommodation space via the housing, at least part of heat of the electronic component can be dissipated via the protrusion, the fixing member, and the heat dissipating portion, which facilitates the heat dissipation.

In some embodiments of this application, the first housing includes a first wall, a second wall, and a third wall. The second wall is connected to the first wall, and the first wall is aligned with the second housing along a first direction. The second wall is connected to the first wall, and the third wall is connected to the first wall and spaced apart from the second wall in the second direction, the second direction being perpendicular to the first direction. The protrusion is connected to at least one of the first wall and the second wall.

The protrusion being connected to at least one of the first wall and the second wall is conducive to dissipating the heat via the first housing.

In some embodiments of this application, the electrochemical apparatus further includes a first elastic member, where the first elastic member is partly located between the heat conducting portion and the fixing member, and the first elastic member is in a compressed state.

The first elastic member can provide the function of transferring heat, helping to improve the heat transfer efficiency between the heat conducting portion and the fixing member and thus to improve heat dissipation. The first elastic member can also provide insulating protection, reducing the risk of short circuit occurring to the electronic component. The first elastic member can also provide cushioning, reducing the risk of crushing the heat conducting portion by the fixing member.

In some embodiments of this application, the electrochemical apparatus further includes a second elastic member, where the second elastic member is partly located between the heat conducting portion and the protrusion, and the second elastic member is in a compressed state.

The second elastic member can perform the function of transferring heat, helping to improve the heat transfer efficiency between the heat conducting portion and the protrusion and thus to improve heat dissipation. The second elastic member can also provide protection and cushioning, reducing the risk of damaging the heat conducting portion by the protrusion.

In some embodiments of this application, the fixing member includes a first portion and a second portion. The first portion is connected to the heat conducting portion, a projection of the first portion overlaps a projection of the heat conducting portion in the first direction, and the second portion is connected to the first portion and the second wall.

The fixing member is connected to the heat conducting portion via the first portion, and the second portion is connected to the second wall. This is conducive to dissipating heat of the heat conducting portion, thus improving heat dissipation.

In some embodiments of this application, the fixing member includes a first portion and an extension portion. The first portion is connected to the heat conducting portion, and in the first direction, a projection of the first portion overlaps a projection of the heat conducting portion. The extension portion is connected to the first portion, the extension portion is located on a side of the first portion facing away from the protrusion in the first direction, and a thermal conductivity coefficient of the extension portion is greater than a thermal conductivity coefficient of the first portion.

The fixing member being connected to the heat conducting portion via the first portion, the extension portion being connected to the first portion, and the thermal conductivity coefficient of the extension portion being greater than the thermal conductivity coefficient of the first portion help to dissipate part of heat of the heat conducting portion, thus improving the heat dissipation.

In some embodiments of this application, the first circuit board further includes a base plate, and the electronic component includes a main body portion and a welding portion. One end of the welding portion is connected to the base plate, and the other end of the welding portion is connected to the main body portion. The heat conducting portion includes a first region and a second region, where the first region is connected to the main body portion, and the second region is located between the protrusion and the fixing member.

The heat conducting portion being connected to the main body portion via the first region and the second region being connected to the protrusion and the fixing member help to transfer at least part of heat of the main body portion to the protrusion and the fixing member, improving the heat dissipation.

In some embodiments of this application, in the first direction, one end of the main body portion is connected to the base plate, and the other end of the main body portion is connected to the first region. The projection of the main body portion, the projection of the first region, and the projection of the protrusion all overlap the projection of the base plate. This is conducive to transferring force among the main body portion, the first region, the protrusion, and the base plate in the first direction, reducing the impact of force on the welding portion, thus reducing the risk of connection failure of the welding portion.

In some embodiments, the heat conducting portion further includes a third region, the third region being connected to the first region and the second region. Viewed along the first direction, the third region is apart from the fixing member, and the third region is apart from the main body portion. This helps to reduce the risk of damaging the electronic component due to the bumping between the fixing member and the main body portion.

In some embodiments of this application, the first housing includes a first wall, and the first wall and the second housing are aligned along the first direction. In the first direction, a gap is provided between the base plate and the first wall, and a minimum length of the gap is not less than 5 mm.

The gap can provide protection, reducing impact of heat of the first wall on the first circuit board.

In some embodiments of this application, the first housing further includes a fourth wall, a fifth wall, and a second recess. The fourth wall is connected to the first wall, the second wall, and the third wall. The fifth wall is connected to the first wall, the second wall, and the third wall, and is aligned with the fourth wall along a third direction, the third direction being perpendicular to the first direction and the second direction. The second recess is disposed outside the accommodation space and recessed towards the accommodation space from the surface of the first wall, the surface of the third wall, the surface of the fourth wall, and the surface of the fifth wall. In the second direction, the second recess and the first recess are respectively located at two opposite ends of the first wall.

The second recess can increase the heat dissipation area of the first housing, helping to further improve the heat dissipation.

In some embodiments of this application, the electrochemical apparatus further includes a handle, where the handle is disposed outside the accommodation space and rotatably connected to the fourth wall and the fifth wall. The handle is rotatable to a first position and a second position opposite the first housing. When rotated to the first position, the handle is partially located in the second recess and in a stored state. When rotated to the second position, the handle partially extends beyond the first wall in the first direction.

The handle, when located in the first position, can reduce the impact on the overall volume of the electrochemical apparatus, allowing for easier storage. When located in the second position, the handle can be grasped or pulled by the operator to move the electrochemical apparatus.

In some embodiments, viewed along the first direction, the handle is away from the heat dissipating portion, such that when grasping the handle, the hand of the operator can suffer less risk of being burnt by the heat dissipating portion.

In some embodiments of this application, the heat dissipating portion includes a fin, the fin being conducive to improving the heat dissipation of the heat dissipating portion.

An embodiment of this application provides an electric device including the electrochemical apparatus according to any one of the foregoing embodiments.

In the electric device, the electrochemical apparatus is provided in a way that the heat conducting portion on the electronic component is connected to the protrusion, the heat conducting portion is partly located between the protrusion and the fixing member, and the protrusion is connected to the heat dissipating portion outside the accommodation space via the housing, facilitating the heat dissipation of the electronic component. This in turn helps the heat dissipation of the electrochemical apparatus, reducing the impact of the electrochemical apparatus on the electric device due to temperature rise.

### BRIEF DESCRIPTION OF DRAWINGS

FIG. 1 is a schematic diagram of a three-dimensional structure of an electrochemical apparatus according to an embodiment of this application.
FIG. 2 is a view of a cross section II-II in the electrochemical apparatus shown in FIG. 1.
FIG. 3 is an enlarged view of a region III in the cross section view shown in FIG. 2 according to an embodiment of this application.
FIG. 4 is a schematic structural diagram of a first housing according to an embodiment of this application.
FIG. 5 is a schematic structural diagram of a first circuit board and a fixing member being connected to a first housing according to an embodiment of this application.
FIG. 6 is an exploded view of the structure shown in FIG. 5.
FIG. 7 is a schematic structural diagram of an extended embodiment of the region III in the cross section view shown in FIG. 2 according to an embodiment of this application.
FIG. 8 is an exploded view of a first circuit board, a fixing member, and a first elastic member without being connected to a first housing according to an embodiment of this application.
FIG. 9 is a schematic structural diagram of an extended embodiment of the region III in the cross section view shown in FIG. 2 according to an embodiment of this application.
FIG. 10 is an exploded view of a first circuit board, a fixing member, a first elastic member, and a second elastic member without being connected to a first housing according to an embodiment of this application.
FIG. 11 is a schematic structural diagram of a fixing member according to another embodiment of this application.
FIG. 12 is a schematic structural diagram of an extended embodiment of the region III in the cross section view shown in FIG. 2 according to an embodiment of this application.
FIG. 13 is a schematic structural diagram of an extended embodiment of the region III in the cross section view shown in FIG. 2 according to an embodiment of this application.
FIG. 14 is a schematic structural diagram of a fixing member according to still another embodiment of this application.
FIG. 15 is a schematic structural diagram of the fixing member shown in FIG. 14 being connected to a first circuit board and a first housing according to still another embodiment of this application.
FIG. 16 is a schematic structural diagram of an electronic component according to an embodiment of this application.
FIG. 17 is an exploded view of the electrochemical apparatus shown in FIG. 1 according to an embodiment of this application.
FIG. 18 is another view of a first housing according to an embodiment of this application.
FIG. 19 is a schematic structural diagram of a handle being in a first position according to an embodiment of this application.
FIG. 20 is a schematic structural diagram of a handle being in a second position according to an embodiment of this application.
FIG. 21 is a schematic structural diagram of an electric device according to an embodiment of this application.

**Reference signs of main components:**

| | |
|---|---|
| electrochemical apparatus | 100 |
| first housing | 10 |
| first wall | 111 |
| second wall | 112 |
| third wall | 113 |
| fourth wall | 114 |
| fifth wall | 115 |
| heat dissipating portion | 12 |
| protrusion | 13 |
| first surface | 131 |
| first recess | 141 |
| second recess | 142 |
| third recess | 143 |
| second housing | 20 |
| sixth wall | 21 |
| seventh wall | 22 |
| eighth wall | 23 |
| ninth wall | 24 |
| bottom wall | 25 |
| fourth recess | 26 |
| cell assembly | 30 |
| cell | 31 |
| first circuit board | 41 |
| electronic component | 411 |
| heat conducting portion | 4111 |
| main body portion | 4112 |
| welding portion | 4113 |
| first region | 4114 |
| second region | 4115 |
| third region | 4116 |
| base plate | 412 |
| second circuit board | 42 |
| accommodation space | 50 |
| fixing member | 61 |
| first portion | 611 |
| second portion | 612 |
| extension portion | 613 |
| first elastic member | 62 |
| second elastic member | 63 |
| heat conducting member | 70 |
| handle | 80 |
| electric device | 200 |
| first direction | Z |
| second direction | X |
| third direction | Y |

This application will be further described with reference to the accompanying drawings in the following specific embodiments.

### DETAILED DESCRIPTION

The following describes the technical solutions in the embodiments of this application with reference to the accompanying drawings in the embodiments of this application. Apparently, the described embodiments are only some rather than all of the embodiments of this application.

Unless otherwise defined, all technical and scientific terms used herein shall have the same meanings as commonly understood by those skilled in the art to which this application pertains. The terms used herein in the specification of this application are for description of specific embodiments only without any intention to limit this application. The terms "include", "provided with", and any variants thereof in the descriptions of the specification, claims, and accompanying drawings of this application are intended to cover a non-exclusive inclusion.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

It should be noted that, as shown in the accompanying drawings, sizes such as thickness, length, and width of various members and sizes such as thickness, length, and width of integrated devices in the embodiments of this application are merely for illustrative purposes and should not constitute any limitations on this application.

In the electrochemical apparatus, during operation, the electronic component on the circuit board generates heat, and the temperature rise caused by the heat may affect the performance of the electrochemical apparatus.

In view of the foregoing situation, an embodiment of this application provides an electrochemical apparatus, including a first housing, a second housing, a cell assembly, a first circuit board, a heat dissipating portion, a protrusion, and a fixing member. The first housing and the second housing are connected to form an accommodation space. The cell assembly, the first circuit board, and the fixing member are disposed in the accommodation space, and the cell assembly is connected to the first circuit board. The first circuit board includes an electronic component, the electronic component includes a heat conducting portion, and the heat conducting portion is connected to the protrusion. The heat dissipating portion is disposed outside the accommodation space and connected to the first housing, and the protrusion faces the accommodation space. The fixing member is fixed on the first housing, and the heat conducting portion is partly located between the protrusion and the fixing member.

In the foregoing electrochemical apparatus, as the heat conducting portion on the electronic component is connected to the protrusion, the heat conducting portion is partly located between the protrusion and the fixing member, and the protrusion is connected to the heat dissipating portion outside the accommodation space via the housing, at least part of heat of the electronic component can be dissipated via the protrusion, the fixing member, and the heat dissipating portion, which facilitates the heat dissipation.

The following further describes the embodiments of this application with reference to the accompanying drawings.

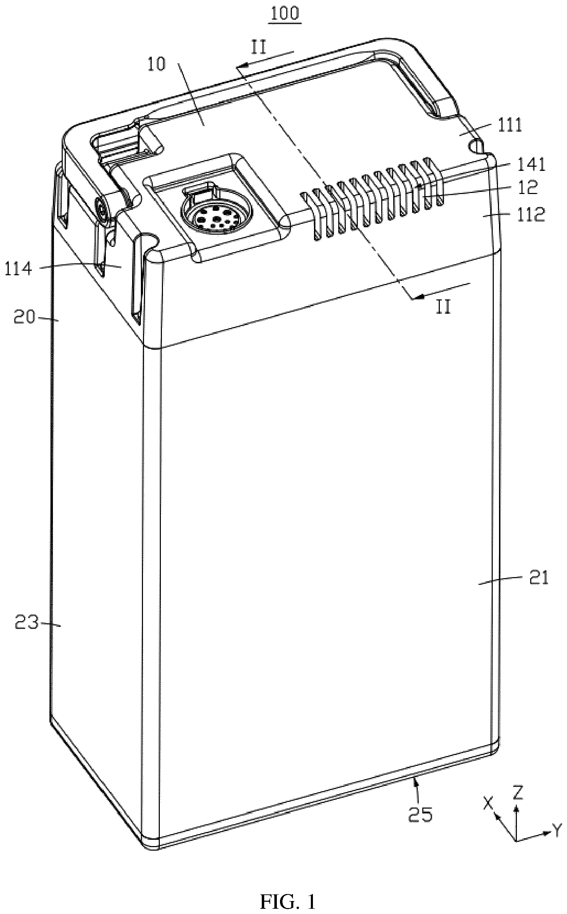

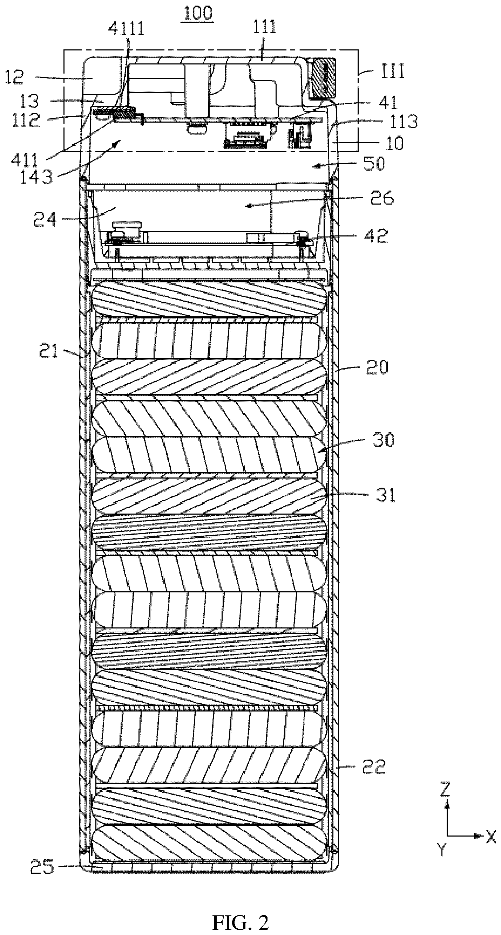

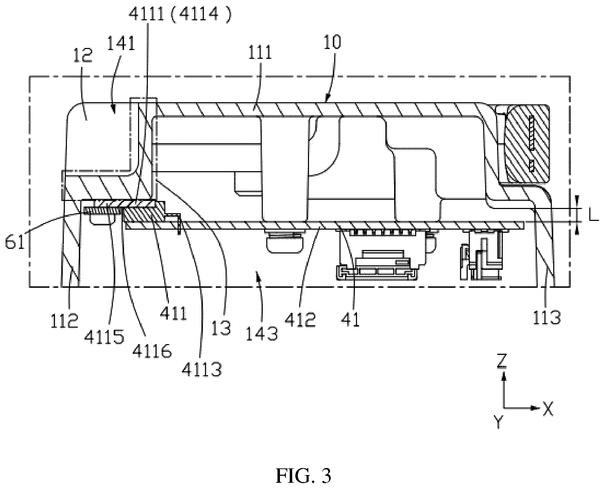

As shown in FIGs. 1, 2, and 3, an embodiment of this application provides an electrochemical apparatus 100, including a first housing 10, a second housing 20, a cell assembly 30, a first circuit board 41, a heat dissipating portion 12, a protrusion 13 (the dashed box region shown in FIG. 3), and a fixing member 61. The first housing 10 and the second housing 20 are aligned along a first direction Z, and the first housing 10 and the second housing 20 are connected to form an accommodation space 50. The cell assembly 30, the first circuit board 41, and the fixing member 61 are disposed in the accommodation space 50, and the cell assembly 30 is connected to the first circuit board 41. The first circuit board 41 includes an electronic component 411, and the electronic component 411 includes a heat conducting portion 4111. The heat dissipating portion 12 is disposed outside the accommodation space 50 and connected to the first housing 10. The protrusion 13 faces the accommodation space 50, and the protrusion 13 is connected to the heat dissipating portion 12 and the heat conducting portion 4111. The fixing member 61 is fixed on the first housing 10, and the heat conducting portion 4111 is partly located between the protrusion 13 and the fixing member 61.

In the electrochemical apparatus 100, as the heat conducting portion 4111 on the electronic component 411 is connected to the protrusion 13 and the fixing member 61, and the protrusion 13 is connected to the heat dissipating portion 12 outside the accommodation space 50, at least part of heat of the electronic component 411 can be dissipated via the protrusion 13, the fixing member 61, and the heat dissipating portion 12, which facilitates the heat dissipation. In addition, the heat dissipating portion 12 being disposed outside the accommodation space 50 can increase the heat exchange efficiency between the heat dissipating portion 12 and the outside, helping to further improve the heat dissipation.

In an embodiment, the first circuit board 41 is configured to control the discharge and charge of the cell assembly 30. In an embodiment, the first circuit board 41 includes a battery management system (battery management system, BMS for short) component, where the BMS component can perform functions such as data collection, control, protection, communication, battery capacity calculation, signal transmission, and energy transfer for a battery cell 31.

In an embodiment, the electronic component 411 includes a metal-oxide-semiconductor field-effect transistor (metal-oxide-semiconductor field-effect transistor, MOSFET for short). The heat conducting portion 4111 is connected to the MOS or disposed thereon.

In an embodiment, the cell assembly 30 includes a plurality of battery cells 31. The plurality of battery cells 31 are stacked in the accommodation space 50 and connected to each other in parallel and/or series and connected to the first circuit board 41. Optionally, the plurality of battery cells 31 are stacked along the first direction Z.

In an embodiment, the heat dissipating portion 12 is connected to the first housing 10, which is conducive to dissipating heat of the heat conducting portion 4111, improving the heat dissipation.

In an embodiment, the heat dissipating portion 12 and the first housing 10 are formed integrally.

In an embodiment, the heat dissipating portion 12 and the first housing 10 can be connected detachably, which helps to not only dissipate the heat of the heat conducting portion 4111, improving heat dissipation, but also reduce manufacturing costs.

In an embodiment, the heat dissipating portion 12 is a fin, the fin helping to improve the heat dissipation of the heat dissipating portion 12. In an embodiment, the heat dissipating portion 12 is provided in plurality, and the plurality of heat dissipating portions 12 are arranged, helping to further improve heat dissipation.

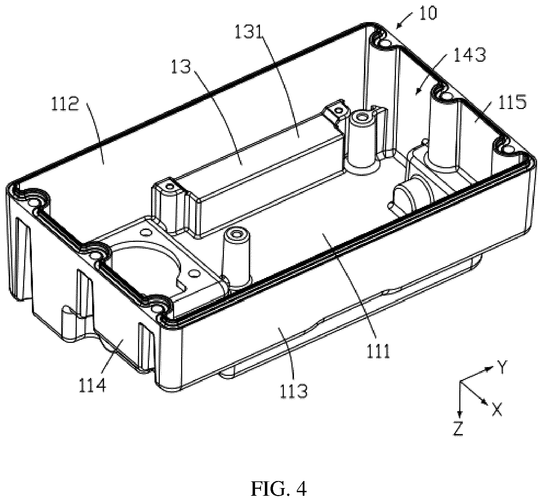

As shown in FIGs. 1, 3, and 4, in an embodiment, the first housing 10 includes a first wall 111, a second wall 112, a third wall 113, a fourth wall 114, and a fifth wall 115. The first wall 111 and the second housing 20 are aligned along the first direction Z, the second wall 112 and the third wall 113 are aligned along a second direction X, and a fourth wall 114 and the fifth wall 115 are aligned along a third direction Y. The second wall 112 and the third wall 113 are both connected to the fourth wall 114 and the fifth wall 115, and the second wall 112, the third wall 113, the fourth wall 114, and the fifth wall 115 are all connected to the first wall 111 and the second housing 20.

In an embodiment, the first wall 111, the second wall 112, the third wall 113, the fourth wall 114, and the fifth wall 115 form an opening toward a third recess 143 of the second housing 20. The protrusion 13, the fixing member 61, and the first circuit board 41 are located in the third recess 143. It can be understood that the third recess 143 contribute to part of the accommodation space 50.

In an embodiment, the first housing 10 is made of a thermally conductive metal material such as aluminum or aluminum alloy, helping to improve the heat dissipation. In an embodiment, the first housing 10 is formed integrally through a casting process, which helps to simplify the manufacturing process and reduce manufacturing costs. In an embodiment, a thermally conductive plastic material is melted using injection molding equipment and then solidified to form the first housing 10.

In an embodiment, the protrusion 13 is connected to the first wall 111, and part of heat of the heat conducting portion 4111 can be dissipated via the protrusion 13 and the first wall 111, helping to further improve heat dissipation. In an embodiment, the protrusion 13 is connected to the second wall 112, and part of heat of the heat conducting portion 4111 can be dissipated via the protrusion 13 and the second wall 112, helping to further improve the heat dissipation. In another embodiment, the protrusion 13 is located between the second wall 112 and the third wall 113, and is away from both the second wall 112 and the third wall 113 (not shown in the figure).

As an example, description is further made below by using an example in which the protrusion 13 is connected to the first wall 111 and the second wall 112.

In an embodiment, the protrusion 13 has a first surface 131, where the first surface 131 is connected to the second wall 112 and space apart from and aligned with the first wall 111 along the first direction Z, and the heat conducting portion 4111 is connected to the first surface 131. In the first direction Z, the projection of the first surface 131 overlaps the projection of the heat dissipating portion 12, which helps to shorten the heat transfer path between the first surface 131 and the heat dissipating portion 12, thus improving the heat dissipation.

In an embodiment, the first housing 10 further includes a first recess 141. The first recess 141 is disposed outside the accommodation space 50 and recessed towards the accommodation space 50 from the surface of the first wall 111 and the surface of the second wall 112. The first recess 141 can increase the heat dissipation area of the first housing 10, helping to improve the heat dissipation.

In an embodiment, at least part of the heat dissipating portion 12 is disposed in the first recess 141 and connected to the first recess 141, the first wall 111, and the second wall 112. Part of heat of the heat conducting portion 4111 can be transferred to the first recess 141 and the second wall 112 via the protrusion 13 and the first wall 111, helping to improve the heat dissipation.

In an embodiment, in the second direction X, the projection of the heat dissipating portion 12 overlaps the projection of the protrusion 13, which helps to shorten the heat transfer path between the protrusion 13 and the heat dissipating portion 12, improving the heat dissipation.

In an embodiment, in the first direction Z, the projection of the first recess 141 overlaps the projection of the first surface 131, which helps to shorten the heat transfer path between the first surface 131 and the first recess 141, improving the heat dissipation. In an embodiment, in the second direction X, the projection of the first recess 141 overlaps the projection of the protrusion 13, which helps to shorten the heat transfer path between the protrusion 13 and the heat dissipating portion 141, improving the heat dissipation.

In an embodiment, the entire heat dissipating portion 12 is located in the first recess 141, which helps to reduce the impact of the heat dissipating portion 12 on the overall volume of the electrochemical apparatus 100, allowing for easier storage. Optionally, all the heat dissipating portions 12 are located in the first recess 141.

In an embodiment, in the first direction Z, a projection of the heat dissipating portion 12 is in the projection of the first recess 141. In an embodiment, in the third direction Z, the projection of the heat dissipating portion 12 is in the projection of the first recess 141.

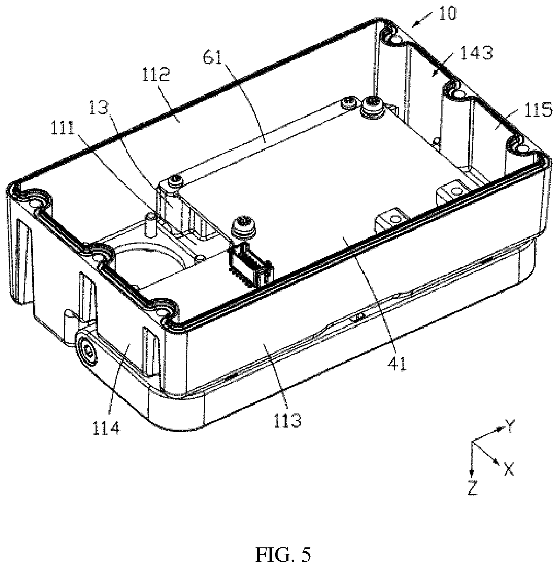

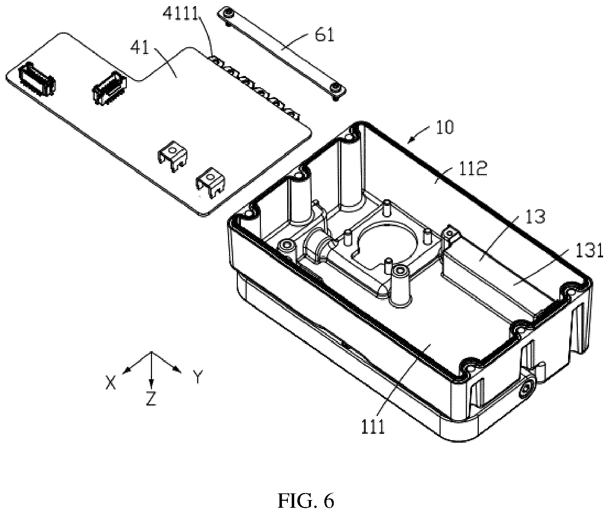

As shown in FIGs. 3, 5, and 6, in an embodiment, the fixing member 61 is disposed in the third recess 143. In the first direction Z, part of the heat conducting portion 4111 is located between the protrusion 13 and the fixing member 61, and the heat conducting portion 4111 has one end connected to the protrusion 13 and the other end connected to the fixing member 61. The fixing member 61 can provide a limiting function to improve the stability of connecting the heat conducting portion 4111 to the protrusion 13. The fixing member 61 can provide a heat dissipation function, part of heat of the heat conducting portion 4111 being dissipated via the fixing member 61, which helps to further improve the heat dissipation.

In an embodiment, the fixing member 61 is made of a thermally conductive metal material such as aluminum or aluminum alloy, helping to improve the heat dissipation. Optionally, the fixing member 61 is made through a sheet metal process. In an embodiment, the fixing member 61 is made of a thermally conductive plastic material, which helps improve the heat dissipation and reduce weight.

In an embodiment, the fixing member 61 is connected to the first wall 111. The first wall 111 is provided with a threaded hole, and the electrochemical apparatus 100 further includes a screw, where the screw penetrates partly through the fixing member 61 and is threadedly connected to the threaded hole, allowing for easier assembly.

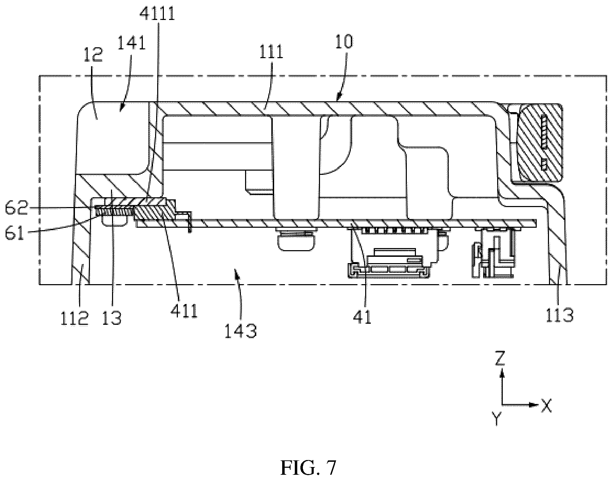

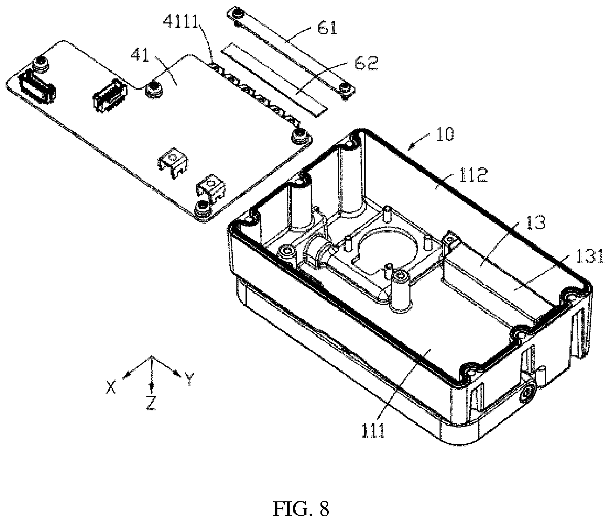

As shown in FIGs. 7 and 8, in an embodiment, the electrochemical apparatus 100 further includes a first elastic member 62. The first elastic member 62 is located in the third recess 143, and the first elastic member 62 is partly located between the fixing member 61 and the heat conducting portion 4111 and connected to the fixing member 61 and the heat conducting portion 4111. In an embodiment, the first elastic member 62 can provide a heat transfer function, which facilitates heat exchange between the heat conducting portion 4111 and the fixing member 61, improving the heat dissipation. In an embodiment, the first elastic member 62 can provide an insulating function to reduce the risk of short circuit occurring when the electronic component 411 is electrically connected to the fixing member 61 via the heat conducting portion 4111. In an embodiment, the first elastic member 62 can serve as a gasket, reducing the impact caused by machining errors and assembly errors between the fixing member 61 and the first wall 111.

In an embodiment, in the first direction Z, the first elastic member 62 is in a compressed and deformed state, providing a cushioning function, thus reducing the risk of crushing the heat conducting portion 4111 and reducing the risk of damaging the electronic component 411. It can be understood that when the fixing member 61 applies pressure to the heat conducting portion 4111, the heat conducting portion 4111 causes displacement of the electronic component 411 along the first direction Z. The first elastic member 62 being deformed for cushioning helps to reduce the displacement of the electronic component 411 along the first direction Z, thereby lowering the risk of damaging electronic component 411.

In an embodiment, the first elastic member 62 is made of a thermally conductive material, such as foam, rubber, or silica gel, which not only provides insulation and heat conduction but also serves as an elastic cushion. In an embodiment, the first elastic member 62 is provided in plurality, and the plurality of first elastic members 62 are stacked, helping to improve the insulation and elastic cushioning effect. It can be understood that the quantity of the first elastic members 62 can be determined based on the actual assembly requirements. The quantity of the first elastic members 62 is not limited particularly to this application.

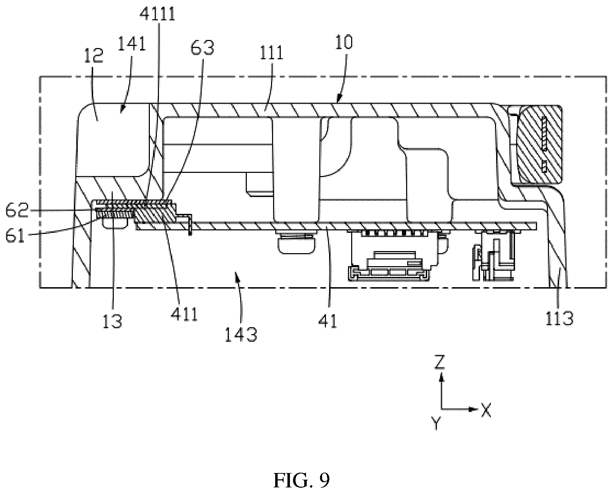

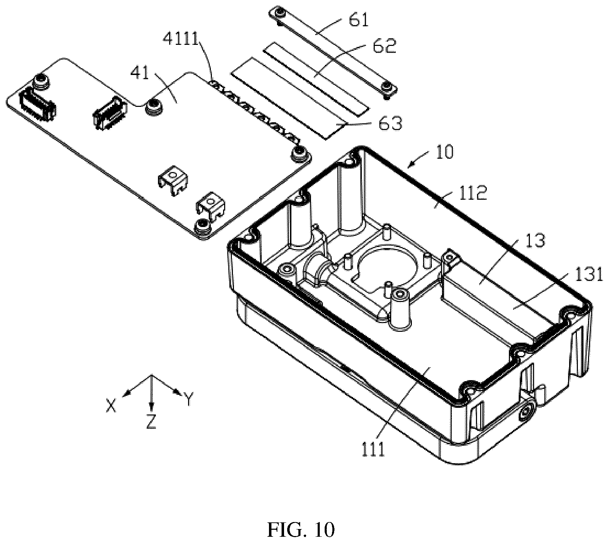

As shown in FIGs. 9 and 10, in an embodiment, the electrochemical apparatus 100 further includes a second elastic member 63. The second elastic member 63 is located in the third recess 143, and is partially located between the heat conducting portion 4111 and the protrusion 13 and connected to the heat conducting portion 4111 and the protrusion 13. The second elastic member 63 can provide a heat transfer function, which facilitates heat exchange between the heat conducting portion 4111 and the protrusion 13, improving the heat dissipation. In an embodiment, the second elastic member 63 can serve as a gasket, reducing the impact caused by machining errors and assembly errors between the fixing member 61 and the first wall 111.

In an embodiment, in the first direction Z, the second elastic member 63 is in a compressed and deformed state, providing a cushioning function, thus reducing the risk of crushing the heat conducting portion 4111 and reducing the risk of damaging the electronic component 411. It can be understood that when the fixing member 61 applies pressure to the heat conducting portion 4111. The protrusion 13 applies a reactive force to the heat conducting portion 4111. The second elastic member 63 being deformed for cushioning helps to reduce the displacement of the electronic component 411 along the first direction Z, thereby lowering the risk of damaging electronic component 411.

In an embodiment, the second elastic member 63 is made of a thermally conductive material, such as foam, rubber, or silica gel, which not only provides heat conduction but also serves as an elastic cushion.

In an embodiment, the second elastic member 63 is provided in plurality, and the plurality of second elastic members 63 are stacked, helping to improve the elastic cushioning effect. It can be understood that the quantity of the second elastic members 63 can be determined based on the actual assembly requirements. The quantity of the second elastic members 63 is not limited particularly to this application.

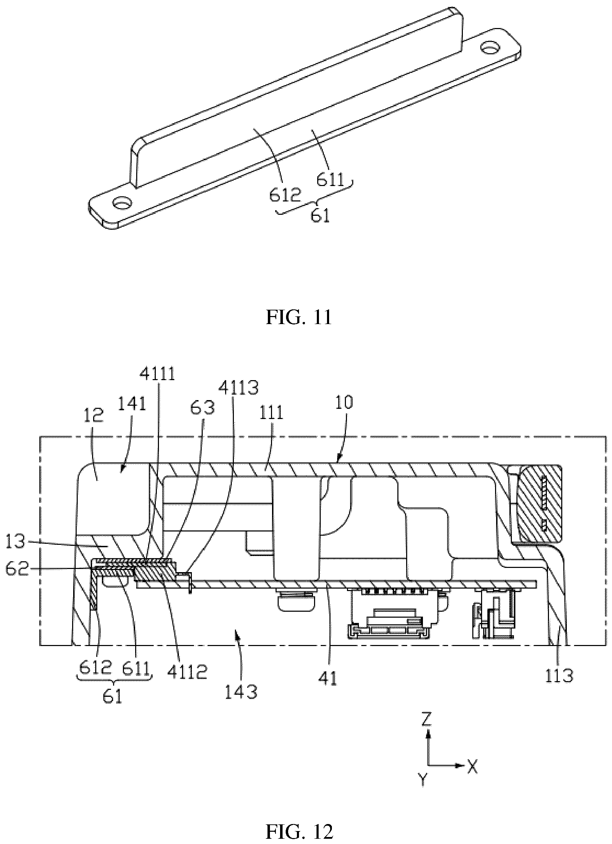

As shown in FIGs. 11 and 12, in an embodiment, the fixing member 61 includes a first portion 611 and a second portion 612, the first portion 611 being connected to the second portion 612. The first portion 611 is connected to the first wall 111 and the heat conducting portion 4111, and the first portion 611 being connected to the first wall 111 allows the heat conducting portion 4111 to be fixed to the protrusion 13. The second portion 612 is connected to the second wall 112, allowing for heat exchange between the second portion 612 and the second wall 112, allowing part of heat of the first portion 611 to be dissipated via the second portion 612 from the second wall 112. Thus, part of heat of the heat conducting portion 4111 can be transferred to the first portion 611 and dissipated via the second portion 612 from the second wall 112, helping to improve the heat dissipation.

In an embodiment, in the first direction Z, a projection of the first portion 611 overlaps the projection of the heat conducting portion 4111, helping to transfer heat of the heat conducting portion 4111 to the first portion 611, thus improving the heat dissipation.

In an embodiment, the fixing member 61 is an integrally formed structure and made of a metal material through the sheet metal process or casting process, helping to improve the heat dissipation and simplify the processing and manufacturing process. In an embodiment, the first portion 611 and the second portion 612 are both made of metal and welded to form the fixing member 61. In an embodiment, a plastic material is melted using injection molding equipment and then solidified to form the fixing member 61, helping to reduce weight and simplify the processing and manufacturing process.

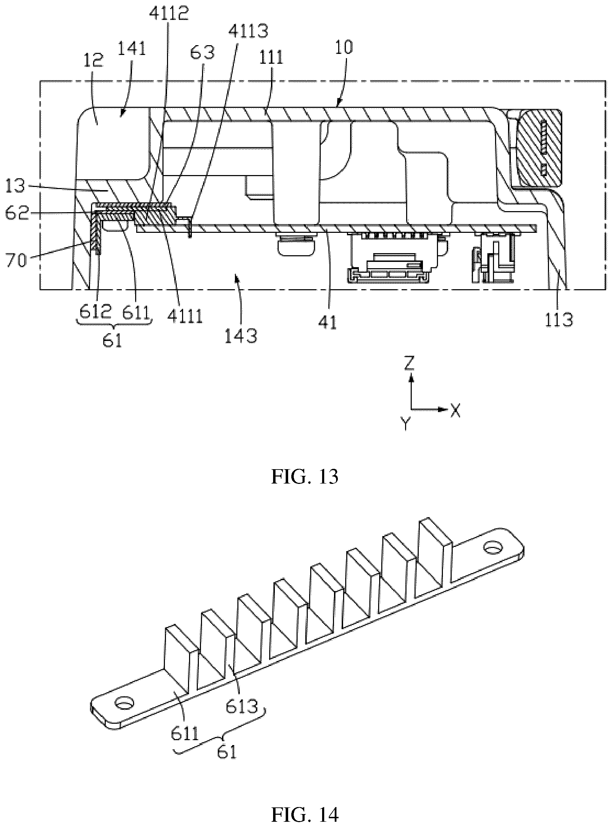

As shown in FIG. 13, in an embodiment, the electrochemical apparatus 100 further includes a heat conducting member 70 disposed in the third recess 143. The heat conducting member 70 is at least partly located between the second portion 612 and the second wall 112 and connected to the second portion 612 and the second wall 112. The heat conducting member 70 can provide heat conduction, improving the heat exchange between the second portion 612 and the second wall 112, thus improving the heat dissipation.

In an embodiment, a heat conducting gel is filled between the second portion 612 and the second wall 112 and then solidified to form the heat conducting member 70. In an embodiment, the heat conducting member 70 is a heat conducting adhesive tape, the heat conducting adhesive tape being attached to the second portion 612 and the second wall 112. In an embodiment, the heat conducting member 70 includes a foam, the foam being filled in a gap between the second portion 612 and the second wall 112.

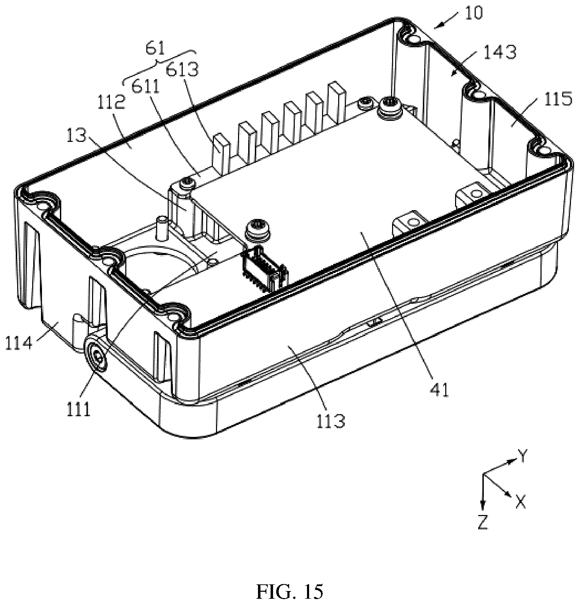

As shown in FIGs. 14 and 15, in an embodiment, the fixing member 61 includes a first portion 611 and a plurality of extension portions 613, the plurality of extension portions 613 being disposed in the first portion 611. The first portion 611 is connected to the first wall 111 and the heat conducting portion 4111, and the first portion 611 being connected to the first wall 111 allows the heat conducting portion 4111 to be fixed to the protrusion 13. The plurality of extension portions 613 are arranged on a side of the first portion 611 away from the protrusion 13, and the plurality of extension portions 613 are aligned. The plurality of extension portions 613 help to increase the heat dissipation area of the fixing member 61, and part of heat of the heat conducting portion 4111 is dissipated via the first portion 611 and a plurality of extension portions 613, helping to improve the heat dissipation. Optionally, the plurality of extension portions 613 are spaced and aligned along the third direction Y.

In an embodiment, a thermal conductivity coefficient of the extension portion 613 is greater than the thermal conductivity coefficient of the first portion 611, helping the extension portion 613 to dissipate the heat, improving the heat dissipation. Optionally, the thermal conductivity coefficient of the extension portion 613 is 50 W/mk to 220 W/mk, and the thermal conductivity coefficient of the first portion 611 is 1 W/mk to 150 W/mk.

In the first direction Z, a projection of the first portion 611 overlaps the projection of the heat conducting portion 4111, helping to transfer heat of the heat conducting portion 4111 to the first portion 611, thus improving the heat dissipation.

In an embodiment, the fixing member 61 is an integrally formed structure and made of a metal material through the sheet metal process or casting process, helping to improve the heat dissipation and simplify the processing and manufacturing process. In an embodiment, the first portion 611 and the plurality of extension portions 613 are both made of metal and welded to form the fixing member 61. In an embodiment, a plastic material is melted using injection molding equipment and then solidified to form the fixing member 61, helping to reduce weight and simplify the processing and manufacturing process.

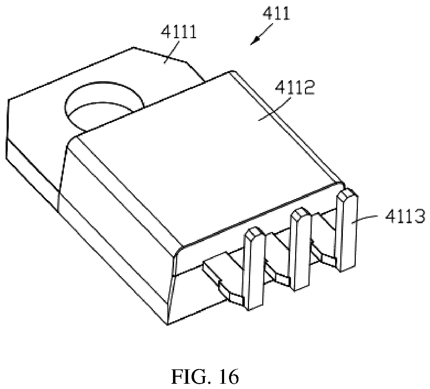

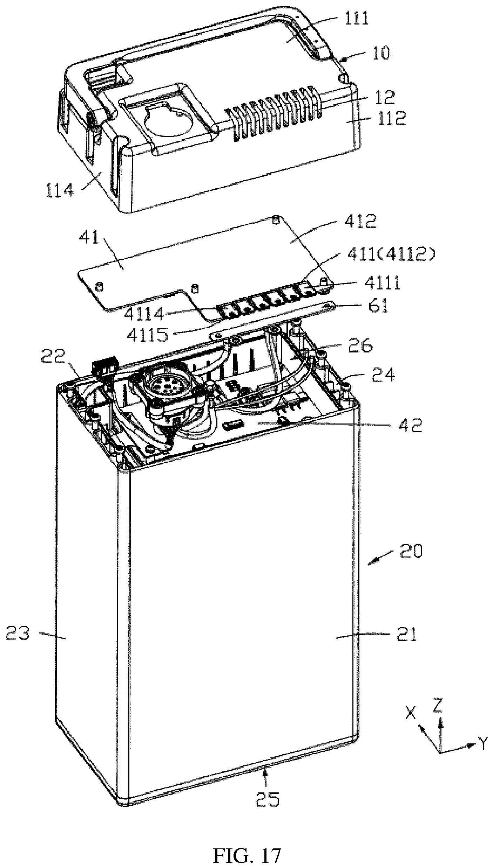

As shown in FIGs. 3, 16, and 17, in an embodiment, the first circuit board 41 further includes a base plate 412. The electronic component 411 includes a main body portion 4112 and a welding portion 4113. One end of the welding portion 4113 is connected to the base plate 412, and the other end of the welding portion 4113 is connected to the main body portion 4112. The main body portion 4112 is connected to the base plate 412 via the welding portion 4113, which helps to reduce the length of the first circuit board 41 in the first direction, reducing the impact of the first circuit board 41 on the accommodation space 50, thus increasing the space utilization of the electrochemical apparatus 100.

In an embodiment, the electronic component 411 is provided in plurality, and the plurality of electronic components 411 are aligned and all connected to the protrusion 13 via the heat conducting portion 4111, helping to improve the heat dissipation. Optionally, the fixing member 61 is connected to the heat conducting portions 4111 on a plurality of electronic components 411.

In an embodiment, the heat conducting portion 4111 is connected to the main body portion 4112, and at least part of heat of the main body portion 4112 is transferred to the protrusion 13 via the heat conducting portion 4111. The heat conducting portion 4111 can provide a heat conducting function to improve the heat exchange between the main body portion 4112 and the protrusion 13, thus improving the heat dissipation. In addition, the heat conducting portion 4111 can provide a medium connecting function to reduce the risk of damaging the main body portion 4112 due to the action of the fixing member 61 on the main body portion 4112. Optionally, the heat conducting portion 4111 is made of a thermally conductive metal material such as copper.

In an embodiment, the heat conducting portion 4111 is a portion of the main body portion 4112, with the heat conducting portion 4111 (not shown in the figure) formed by a portion of surface of the main body portion 4112. The main body portion 4112 is in contact connection to the protrusion 13 via the heat conducting portion 4111, which helps to shorten the heat transfer path between the main body portion 4112 and the protrusion 13, improving the heat dissipation.

As an example, description is further made below by using an example in which the heat conducting portion 4111 is connected to the main body portion 4112.

In an embodiment, the heat conducting portion 4111 includes a first region 4114 and a second region 4115. The first region 4114 is connected to the main body portion 4112 and the second region 4115 is located between the protrusion 13 and the fixing member 61.

In an embodiment, in the first direction Z, one end of the main body portion 4112 is connected to the base plate 412, and the other end of the main body portion 4112 is connected to the first region 4114. The projection of the main body portion 4112, the projection of the first region 4114, and the projection of the protrusion 13 all overlap the projection of the base plate 412. When the heat conducting portion 4111 is subjected to force in the first direction Z, the force can be transferred to the protrusion 13 in the first direction Z or to the base plate 412 via the main body portion 4112 in the first direction Z. This helps to reduce the impact of the force on the welding portion 4113, thus reducing the risk of damaging the electronic component 411.

In an embodiment, the heat conducting portion 4111 further includes a third region 4116, the third region 4116 being connected to the first region 4114 and the second region 4115. Viewed along the first direction Z, the third region 4116 is away from the fixing member 61 and also from the main body portion 4112, allowing for a safe distance between the fixing member 61 and the main body portion 4112, reducing the risk of the fixing member 61 bumping the main body portion 4112.

In an embodiment, as shown in FIG. 3, in the first direction Z, a gap is provided between the base plate 412 and the first wall 111, the minimum length of the gap being L equal to or greater than 5 mm. The range of the gap between the base plate 412 and the first wall 111 can provide protection, reducing the impact of the heat of the first wall 111 on the first circuit board 41. Optionally, L is any one of 5 mm. 5.5 mm, 6 mm. 6.5 mm, and 7 mm.

As shown in FIGs. 1, 2, and 17, in an embodiment, the second housing 20 includes a sixth wall 21, a seventh wall 22, an eighth wall 23, a ninth wall 24, and a bottom wall 25. The sixth wall 21 and the seventh wall 22 are aligned along the second direction X, the eighth wall 23 and the ninth wall 24 are aligned along the third direction Y, and the bottom wall 25 and the first wall 111 are aligned along the first direction Z. The six wall 21, the seventh wall 22, the eighth wall 23, and the ninth wall 24 are all connected to the bottom wall 25. The six wall 21, the seventh wall 22, the eighth wall 23, the ninth wall 24, and the bottom wall 25 form an opening toward a fourth recess 26 of the first wall 111, and the cell assembly 30 is disposed in the fourth recess 26. It can be understood that the fourth recess 26 contributes to part of the accommodation space 50.

In an embodiment, the sixth wall 21, the seventh wall 22, the eighth wall 23, and the ninth wall 24 are all connected to the first housing 10. Optionally, the sixth wall 21 is connected to the second wall 112, the seventh wall 22 is connected to the third wall 113, the eighth wall 23 is connected to the fourth wall 114, and the ninth wall 24 is connected to the fifth wall 115.

In an embodiment, the second housing 20 is made of a thermally conductive metal material such as aluminum or aluminum alloy, helping to improve the heat dissipation. In an embodiment, the second housing 20 is formed integrally through a casting process, which helps to simplify the manufacturing process and reduce manufacturing costs. In an embodiment, a thermally conductive plastic material is melted using injection molding equipment and then solidified to form the second housing 20.

In an embodiment, the electrochemical apparatus 100 further includes a second circuit board 42. The second circuit board 42 is disposed in the accommodation space 50, connected to the first circuit board 41 and the cell assembly 30, and configured to obtain information about a plurality of battery cells 31 in the cell assembly 30.

In an embodiment, the second circuit board 42 includes a battery management system (battery management system, BMS for short) component, where the BMS component can perform functions such as data collection, control, protection, communication, battery capacity calculation, signal transmission, and energy transfer for a battery cell 31.

In an embodiment, the second circuit board 42 is located in the fourth recess 26. In an embodiment, in the first direction Z, the second circuit board 42 is located between the first circuit board 41 and the cell assembly 30, helping to increase the space utilization of the electrochemical apparatus 100. In an embodiment, in the first direction Z, a gap is provided between the second circuit board 42 and the first circuit board 41, to provide protection, reducing the impact of heat of the first circuit board 41 on the second circuit board 42 as well as the impact of heat of the second circuit board 42 on the first circuit board 41.

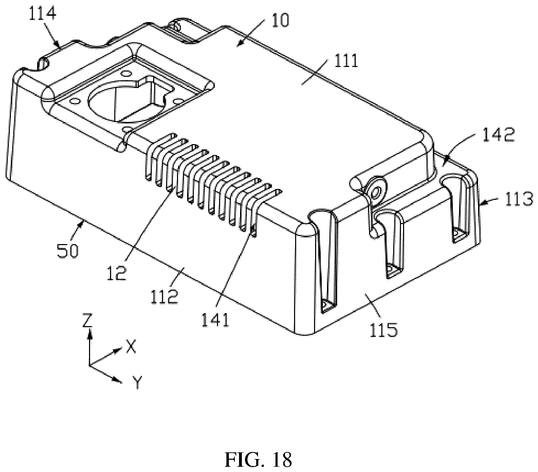

As shown in FIGs. 18, 19, and 20, in an embodiment, the first housing 10 further includes a second recess 142. The second recess 142 is disposed outside the accommodation space 50 and recessed towards the accommodation space 50 from the surface of the first wall 111, the surface of the third wall 113, the surface of the fourth wall 114, and the surface of the fifth wall 115. The second recess 142 can increase the heat dissipation area of the first housing 10, helping to improve the heat dissipation.

In an embodiment, the electrochemical apparatus 100 further includes a handle 80, where the handle 80 is disposed outside the accommodation space 50 and rotatably connected to the fourth wall 114 and the fifth wall 115. The handle 80 can be grasped or pulled by the operator to move the electrochemical apparatus 100, so as to improve the convenience of the electrochemical apparatus 100.

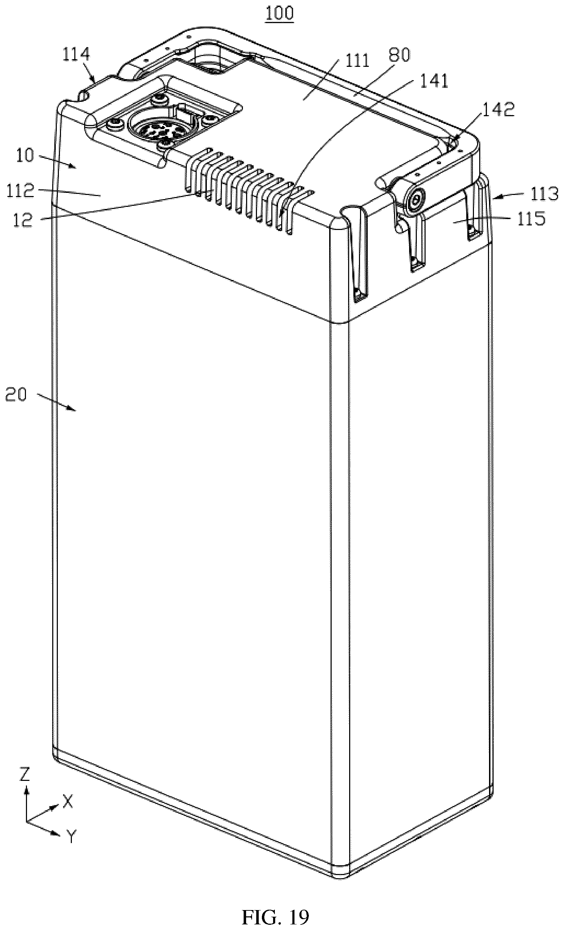

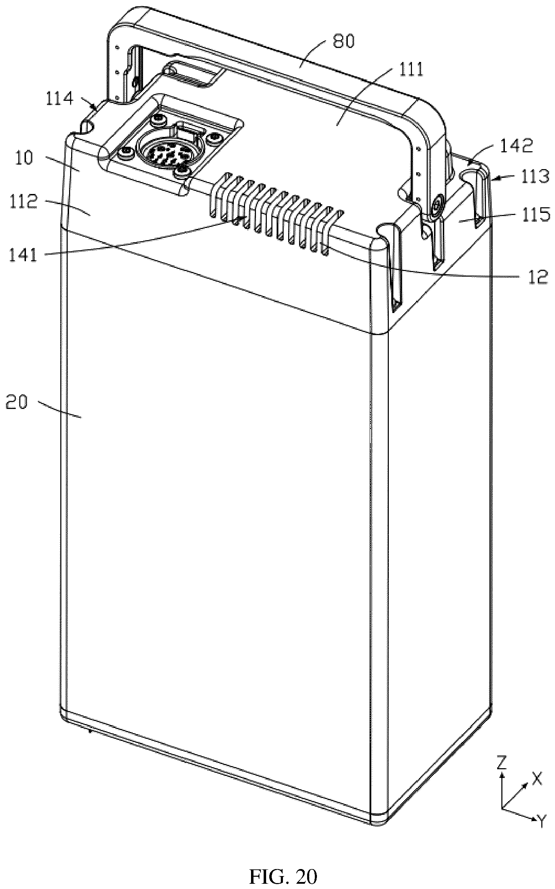

In an embodiment, the handle 80 is rotatable to a first position and a second position opposite the first housing 10. When rotated to the first position (as shown in FIG. 19), the handle 80 is partially located in the second recess 142. This can reduce the impact of the handle 80 on the overall volume of the electrochemical apparatus 100, making it easier to store the electrochemical apparatus 100. This is a stored state. When the handle 80 is rotated to the second position (as shown in FIG. 20), in the first direction Z, the handle 80 partly extends beyond the first wall 111, so as to be grasped or pulled by the operator to move the electrochemical apparatus 100.

In an embodiment, in the second direction X, the second recess 142 and the first recess 141 are respectively located at two opposite ends of the first wall 111. When rotated to the first position, the handle 80 is partially located in the second recess 142. The handle 80 located in the second recess 142 is away from the first recess 141 and the heat dissipating portion 12 in the first recess 141, helping to reduce the impact of heat of the heat dissipating portion 12 on the handle 80, thus reducing the risk of hand being burnt in contact with the handle 80.

In an embodiment, when rotated to the second position and viewed along the first direction Z, the handle 80 is away from the heat dissipating portion 12, helping to reduce the risk that the hand is burnt when grasping the handle 80 to pull the electrochemical apparatus 100.

In an embodiment, when rotated to the second position, viewed along the first direction Z, the handle 80 is away from the protrusion 13, helping to reduce the risk that the hand is burnt when grasping the handle 80 to pull the electrochemical apparatus 100.

In summary, in the electrochemical apparatus 100 of this application, as the heat conducting portion 4111 on the electronic component 411 is connected to the protrusion 13, and the protrusion 13 is connected to the heat dissipating portion 12 outside the accommodation space 50, at least part of heat of the electronic component 411 can be dissipated via the protrusion 13 and the heat dissipating portion 12, which facilitates the heat dissipation. In addition, the heat dissipating portion 12 being disposed outside the accommodation space 50 can increase the heat dissipation area of the first housing 10 and the heat exchange rate between the heat dissipating portion 12 and the outside, helping to further improve the heat dissipation.

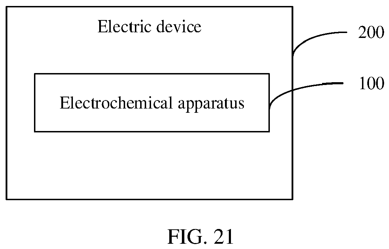

As shown in FIG. 21, an embodiment of this application provides an electric device 200, including the electrochemical apparatus 100 according to any one of the embodiments.

In the electrochemical apparatus 100 of the foregoing electric device 200, the heat conducting portion 4111 on the electronic component 411 is connected to the protrusion 13, and the protrusion 13 is connected to the heat dissipating portion 12 outside the accommodation space 50. This facilitates the heat dissipation of the electrochemical apparatus 100, reducing the impact of the electrochemical apparatus 100 on the electric device 200 due to the temperature rise.

In an embodiment, the electric device 200 includes, but is not limited to, any one of unmanned aerial vehicles, electric bicycles, electric tools, and robots.

Furthermore, persons skilled in the art can make other modifications based on the spirit of this application. Certainly, all such modifications made based on the spirit of this application should be included within the disclosure scope of this application.

## Claims

1. An electrochemical apparatus(100), comprising:
a first housing(10), a second housing(20), a cell assembly(30), and a first circuit board(41); wherein the first housing(10) and the second housing(20) are connected to form an accommodation space(50), the cell assembly(30) and the first circuit board(41) are disposed in the accommodation space(50), and the cell assembly(30) is connected to the first circuit board(41);
the first circuit board(41) comprises an electronic component(411), wherein the electronic component(411) comprises a heat conducting portion(4111);
the electrochemical apparatus(100) further comprising:
a heat dissipating portion(12) disposed outside the accommodation space(50) and connected to the first housing(10);
a protrusion(13) facing the accommodation space(50), the heat conducting portion(4111) is connected to the protrusion(13); and
a fixing member(61) disposed in the accommodation space(50) and fixed on the first housing(10); wherein
the heat conducting portion(4111) is partly located between the protrusion(13) and the fixing member(61).

2. The electrochemical apparatus(100) according to claim 1, wherein the first housing(10) comprises:
a first wall(111) aligned with the second housing(20) along a first direction(Z);
a second wall(112) connected to the first wall(111); and
a third wall(113) connected to the first wall(111) and spaced apart from the second wall(112) in a second direction(X), the second direction(X) being perpendicular to the first direction(Z); wherein
the protrusion(13) is connected to at least one of the first wall(111) or the second wall( 112).

3. The electrochemical apparatus(100) according to claim 2, wherein the first housing(10) further includes a firstrecess(141), the first recess(141) is disposed outside the accommodation space(50), the first recess(141) is recessed towards the accommodation space(50) from the surface of the first wall(111) and the surface of the second wall(112), at least a part of the heat dissipating portion(12) is disposed in the first recess(141) and connected to the first wall(111) and the second wall(112).

4. The electrochemical apparatus(100) according to claim 2, wherein the protrusion(13) has a first surface(131), and the heat conducting portion (4111) is connected to the first surface(131); in the first direction(Z), the projection of the first surface(131) overlaps the projection of the heat dissipating portion(12).

5. The electrochemical apparatus(100) according to claim 1, wherein further comprising a first elastic member(62), the first elastic member(62) is partly located between the heat conducting portion(4111) and the fixing member(61), and the first elastic member(62) is in a compressed state.

6. The electrochemical apparatus(100) according to claim 5, wherein further comprising a second elastic member(63), the second elastic member(63) is partly located between the heat conducting portion(4111) and the protrusion(13), and the second elastic member(63) is in a compressed state.

7. The electrochemical apparatus(100) according to claim 2, wherein the fixing member(61) comprises:
a first portion(611) connected to the heat conducting portion(4111), wherein in the first direction(Z), a projection of the first portion(611) overlaps a projection of the heat conducting portion(4111); and
a second portion(612) connected to the first portion(611) and the second wall(112).

8. The electrochemical apparatus(100) according to claim 2, wherein the fixing member(61) comprises:
a first portion(611) connected to the heat conducting portion(4111), wherein in the first direction(Z), a projection of the first portion(611) overlaps a projection of the heat conducting portion(4111); and
an extension portion(613) connected to the first portion(611), wherein the extension portion(613) is located on a side of the first portion(611) facing away from the protrusion(13) in the first direction(Z), and a thermal conductivity coefficient of the extension portion(613) is greater than a thermal conductivity coefficient of the first portion(611).

9. The electrochemical apparatus(100) according to any one of claims 1 to 8, wherein
the first circuit board(41) further comprises a base plate(412); the electronic component(411) comprises a main body portion(4112) and a welding portion(4113); one end of the welding portion(4113) being connected to the base plate(412), and another end of the welding portion(4113) being connected to the main body portion(4112); and
the heat conducting portion(4111) comprises a first region(4114) and a second region(4115), the first region(4114) being connected to the main body portion(4112), and the second region(4115) being located between the protrusion(13) and the fixing member(61); wherein
in the first direction(Z), one end of the main body portion(4112) is connected to the base plate(412), the other end of the main body portion(4112) is connected to the first region(4114), a projection of the main body portion(4112), a projection of the first region(4114), a projection of the protrusion(13) all overlap a projection of the base plate(412).

10. The electrochemical apparatus(100) according to claim 9, wherein
the heat conducting portion(4111) further comprises a third region(4116), wherein the third region(4116) is connected to the first region(4114) and the second region(4115); and
viewed along the first direction(Z), the third region(4116) is apart from the fixing member(61), and the third region(4116) is apart from the main body portion(4112).

11. The electrochemical apparatus(100) according to claim 9, wherein
the first housing(10) comprises a first wall(111), wherein the first wall(111) and the second housing(20) are aligned along the first direction(Z); and
in the first direction(Z), a gap is provided between the base plate(412) and the first wall(111), and a minimum length of the gap is not less than 5 mm.

12. The electrochemical apparatus(100) according to claim 2, wherein
further comprising a handle(80), the handle(80) is disposed outside the accommodation space(50), and the handle(80) is rotatable to a first position and a second position opposite to the first housing(10); wherein
when rotated to the first position, the handle(80) is in a stored state; and
when rotated to the second position, the handle(80) partially extends beyond the first wall(111) in the first direction(Z), and viewed along the first direction(Z), the handle(80) is apart from the heat dissipating portion(12).

13. The electrochemical apparatus(100) according to claim 12, wherein
the first housing(10) further includes a fourth wall(114) and a fifth wall(115), the fourth wall(114) and the fifth wall(115) are aligned along a third direction(Y), the third direction(Y) being perpendicular to the first direction(Z) and the second direction(X), the second wall (112) and the third wall(113) are both connected to the fourth wall(114), the second wall (112) and the third wall(113) are both connected to the fifth wall(115); wherein
the first housing(10) further includes a second recess(142), the second recess(142) is disposed outside the accommodation space(50), the second recess(142) is recessed towards the accommodation space(50) from the surface of the first wall(111), the surface of the third wall(113), the surface of the fourth wall(114), and the surface of the fifth wall(115).

14. The electrochemical apparatus(100) according to claim 13, wherein
in the second direction(X), the second recess(142) and the first recess(141) are located at two opposite ends of the first wall (111); wherein
when rotated to the first position, at least a part of the handle(80) is located in the second recess(142).

15. An electric device(200), comprising the electrochemical apparatus(100) according to any one of claims 1 to 14.
